## Europäisches Patentamt

## European Patent Office

## Office européen des brevets

(19)

(11) Veröffentlichungsnummer: **0 126 106**
**B1**

(12)

# EUROPÄISCHE PATENTSCHRIFT

(45) Veröffentlichungstag der Patentschrift:
14.01.87

(21) Anmeldenummer: **83903539.1**

(22) Anmeldetag: **21.11.83**

(86) Internationale Anmeldenummer:
**PCT/DK 83/00109**

(87) Internationale Veröffentlichungsnummer:
**WO 84/02073 (07.06.84 Gazette 84/14)**

(51) Int. Cl.⁴: **A 61 G 7/04** //
**A47C27/16, A47G9/00, B68G7/06**

(54) **MATRATZE.**

(30) Priorität: **23.11.82 DK 5204/82**

(43) Veröffentlichungstag der Anmeldung:
**28.11.84 Patentblatt 84/48**

(45) Bekanntmachung des Hinweises auf die Patenterteilung:
**14.01.87 Patentblatt 87/3**

(84) Benannte Vertragsstaaten:
**AT BE CH DE FR GB LI LU NL SE**

(56) Entgegenhaltungen:
**CH-A-369 557**
**DE-A-283 960**
**DE-A-1 529 382**
**DE-A-1 554 031**
**DE-A-2 307 938**
**US-A-2 256 939**
**US-A-2 725 927**

(73) Patentinhaber: **JACOBSEN, Poul Erik Bay,
Arhusgade 24 c, DK- 8900 Randers (DK)**

(72) Erfinder: **JACOBSEN, Poul Erik Bay, Arhusgade 24
c, DK- 8900 Randers (DK)**

(74) Vertreter: **Reinhard, Skuhra, Weise,
Leopoldstrasse 51, D-8000 München 40 (DE)**

LIBER, STOCKHOLM 1987

## Description

The invention relates to a mattress according to the preamble of claim 1 as well as a method for producing a mattress and a tool for filling a mattress according to claim 9 or 14, respectively.

A mattress according to the preamble of claim 1 is known from CH-A-369 557 and is divided up into compartments by means of lengthwise and crosswise arranged seams. The compartments are filled up with particles of plastic foam. The covering consists of plates made from plastic foam.

DE-A-1 S54 031 describes a cushion or supporting element with a filling of balls made from plastic foam.

From DK-A- 121 398, for example, there is known a pillow with a filling of small, rounded particles of plastic material and a soft covering of gauze-like material. The same patent also describes pillows with a filling of comminuted polystyrene foam. From DE-A-2 307 938 there is known a seating underlayer which consists of a filling material of balls of plastic foam or the like and a covering in schape of nylon weave. A similar pillow is knwon from DE-A-2 311 054, this having a covering of textile material. These known mattresses all have one specific object. The object of the pillow according to the DK-A-121 398 is thus to prevent bedsores by providing a massage effect. The seating underlayer according to the DE-A 2 307 938 is described as having a heat-insulating effect and is used. for example, together with car seats.

Finally, the pillow according to DE-A 2 311 054, for reasons of its heat-insulating effect, is also intended for use with the object of preventing possible sufferings in connection with colds.

Each of these known constructions are excellently suited for fulfilling the appointed tasks, but are not expedient for daily use as sleeping underlayers. The reason is that in daily use there arise either problems of humidity, the lack of massage effect or problems with drying-out of the skin.

The object of the present invention is thus to provide a mattress which has the combined effect of holding the body at a suitable temperature without consumption of energy while allowing the sweat which is formed to be effectively ventilated away, and at the same time for said mattress to be capable of producing a massaging action.

The above mentioned object is solved according to the invention by the features within the characterizing portion of claim 1.

Further embodiments of the mattress are claimed by claims 2 to 8.

A method for producing a mattress is specified within claims 9 to 13. A tool for filling the mattress during the execution of said method is specified within claims 14 to 18.

The mattress according to the invention has proved to have an insulating effect without problems of humidity, so that the body is held at a suitable temperature. Moreover, the mattress distributes the pressure of the body against the underlayer in an expedient manner, and the mattressof the invention is therefore comfortable to lie on. The effect of the mattress is at the same time circulation-promoting and massaging on the body, which counteracts bedsores and other inconveniences connected with longer periods of sickbed care.

These advantageous effects can be assumed to lie in the fact that the combination of plastic foam layers and particles of synthetic material provides a suitable ventilation through the mattress itself, while still being suitably heat-insulating, so that the body is neither cooled nor overheated. Furthermore, the movement of the particles in relation to one another provide an expedient massaging action, this being further intensified by the dividing up into compartments.

If the particles of synthetic material are round, as presented in claim 2, the mattress achieved is easy to fill and comfortable to lie on.

According to claim 3, it can be expedient for the synthetic particles to be produced from polystyrol. The mattress is thus given good characteristics by means of a relatively cheap material.

According to claims 4 and 5, a mattress can be characterized by the plastic foam material being polyether, and especially polyether having an impression strength of 145 N at 40% impression. This material has proved to have excellent ventilating and insulating properties, and at the same time to have good supporting characteristics.

If the mattress has transverse channels according to claim 5, it is easy to fill and the mattress can easily be rolled together.

Finally, the mattress has shown to be given good characteristics if the width of the channels in the pressed flat condition is approx. 10 cm and, according to claims 7 and 8, if the thickness of the plastic foam layers is at least 5 mm.

The invention also provides a method of producing a mattress according to the invention, said method being characterized in that two layers of plastic foam material and two layers of covering material are sewn together in such a way that they form a mattress-like part with channels, each of which are provided with an opening, and that either individually or simultaneously the channels are filled with particles of synthetic material, said filling being effected from the bottom of the channels and progressively towards the channels' openings, after which the openings are sew together to form the finished mattress.

This has proved to be a simple and expedient method which results in a good and uniforn filling of ail channels of the mattress.

If, according to claim 10, one fills the channels through one or more tubes, and during the filling the tubes are moved out of the channels from the bottom towards the opening, a very uniform and quick filling is achieved in a simple manner.

Because of the friction between the synthetic filling and the tube, the filling can easily be statically charged, which results in irregular filling According to claim ll, this can be avoided by adding an anti-static agent to the synthetic particles before the filling process.

The method according to the invention can be further characterized by the addition of a starch-containing powder to the synthetic particles, which has also proved to considerably reduce the problems with static electricity. According to claim 13, this powder can be potato flour.

Finally, the invention also relates to a tool for the execution of the method, said tool being characteristic in that it comprises one or more filling tubes having a length which at least corresponds to the depth of the channels to be filled.

By inserting such tubes down into the channels in the mattress to the bottom of said channels, and thereafter filling these with synthetic particles while withdrawing the tubes out of the channels, one can achieve a uniform and quick filling of the channels.

If the cross-section of the tubes is elongatad according to claim 15 a further uniform filling is achieved which is facilitated even more if the tubes are provided with a funnel according to claim 16.

If the tool is designed according to claim 17, an easy dosing is achieved, and if the tubes are made of stainless steel, one can reduce the problem of static electricity while at the same time avoiding discolouring of the mattress by smudging from the tubes.

The invention will now be described in more detail with reference to the drawing, where

fig. 1 shows a section through a part of a mattress according to the invention,

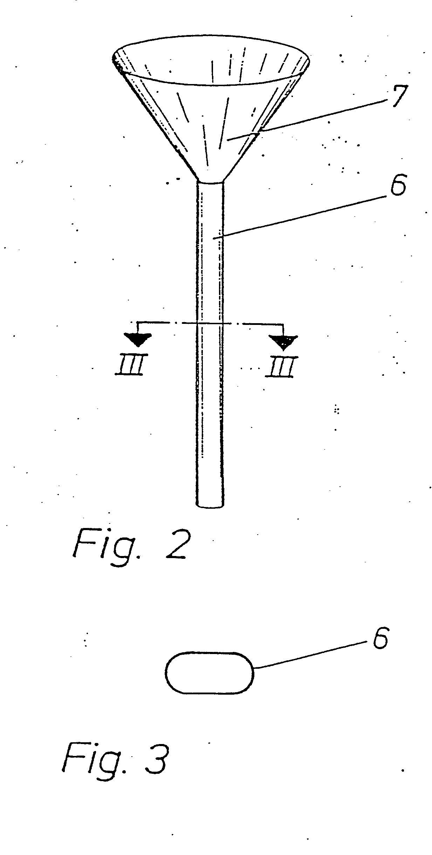

fig. 2 shows a tool according to the invention, and

fig. 3 shows a section through the tool from fig. 2, seen in the direction of the arrows along the line III-III.

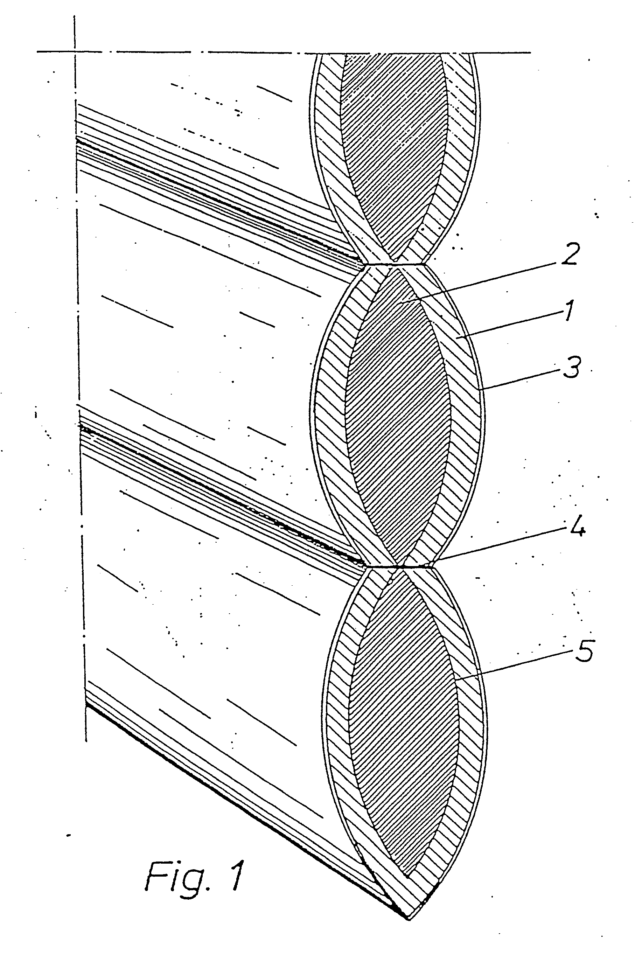

In fig. 1 can be seen a part of the mattress according to the invention. On the outside and on both sides the mattress has a covering 3 of a material which, from the point of view of expediency, can be cotton. Immediately under this layer of material there are provided two layers of porous plastic foam l. It is expedient for these to consist of polyether, but other materials can also be envisaged. These four layers are sewn together at intervals with stitching 4, the result being long channels 5 along the whole of the mattrass's breadth. These channels are filled with particles of synthetic material 2 which, for . example, can be balls of polystyrol, but also here other synthetic materials can be envisaged.

The mattress is filled with the balls by means of the filling tool 8, 7. It is possible for several of such tools to be used simultaneously, each in their own channel 5. Each tool 8, 7 consists of a filling tube 6 having a length which corresponds approximately to that of the channels. Moreover, the tube 8 has an elongated cross-section. These tubes provide a gocd and uniform filling of the channels if the tube 6 is gradualiy withdrawn from the channel as the filling progresses.

Each tube is provided with a funnel-shaped part 7. If several tubes are used at the same time, the tubes can possibly be provided with a common funnel. The volume of the funnel-shaped part 7 can be dimensioned so that together with the volume of the tube 6, it corresponds to the volume of the amount of balls needed to fill each channel 5. It is expedient for the tube 5 to be made of stainless steel, in that other metals which have been tried have proved to sully the mattress when being withdrawn. Moreover, stainless steel is electrically conductive, which reduces the problems connected with static electricity. These problems can be further reduced by mixing the synthetic particles with potato flour before the filling is carried out.

It will be obvious that a mattress according to the invention can be formed in many different ways. For use as a roll mattress for a single person, the preferred embodiment is one in which the mattress measures approx. 80 cm in breadth, 190 cm in length and 3 cm in the thickness. Moreover, the preferred mattress has transverse channels 5 which are approx. 10 cm wide in the pressed flat condition. The degree of filling of the channels 5 can be varied all depending on the degree of hardness that the finished mattress is desired to have.

The mattress according to the invention can be made of materials other than polystyrol and polyether, but this precise combination of materials has proved to give the mattress the desired characteristics.

It will be possible, of course, for anyone skilled in the art to use the tool according to the invention as a part of a more or less autimated apparatus for the filling of the mattress.

Finally, it can be added that the part of an embodiment seen in the drawing is shown on a scale of 1:1.

## Claims

1. Mattres comprising an upper and lower layer (1) consisting of a plastic foam material and being divided up into compartments 5 containing articles (2) of synthetic material, and a cover (3) surrounding the upper and lower layer, characterized in that the upper and lower laver (1) consist of porous plastic foam material, and that the compartments are formed as channels 5.

2. Mattress according to claim 1, characterized in that the synthetic particles (2) are round.

3. Mattress according to claim 1 or 2, characterized in that the synthetic particles (2) are made of polystyrol.

4. Mattress according to claim 1, 2 or 3, characterized in that the plastic foam material (1) is polyether.

5. Mattress according to claim 4, characterized in that the polyetfer plastic foam material has an impression strength of 145 N at 40 % impression.

6. Mattress according to claim 1, 2, 3, 4 o4 5, characterized in that the mattress has transverse channels 5.

7. Mattress according to claim 6, characterized in that the width of the channels 5 in the pressed flat condition is approximately 10 cm.

8. Mattress according to claim 1, 2, 3, 4, 5, 6 or 7, characterized in that the thickness of the porous plastic foam layer (1) is at least 5 mm.

9. Method of producing a mattress according to one of the claims 1 to 8, characterized by the following steps:

a) sewing together of two layers of plastic foam material (1) and two layers of covering material (3) in such a manner that the result is a mattress-like part with channels (5), each of which is provided with an opening,

b) filling the (5) channels either individually or simultaneously with synthetic particles (2), in that said filling is effected from the bottom of the channels and progressively towards the opening of said channels,

c) sewing together of the openings to form the finished mattress.

10. Method according to claim 9, characterized in that the channels (5) are filled through one or more tubes (6), and that during filling the tubes are moved out of the channels from the bottom towards the opening.

11. Method according to claim 9 or 10, characterized in that the synthetic particles (2) are mixed with an anti-static agent before the filling process.

12. Method according to claim 9 or 10, characterized in that the synthetic particles are (2) mixed with a starchy powder before the filling process.

13. Method according to claim 12, characterized in that the synthetic particles (2) are mixed with potato flour.

14. Tool for filling a mattress according to one of the claims 1 to 8 during the execution of the method according to one of the claims 9 to 13, characterized in that the tool comprises one or more filling tubes (6) which are of a length corresponding at least to the depth of the channels (5) to be filled.

15. Tool according to claim 14, characterized in that the filling tube (6) or tubes have an elongated cross-section.

16. Tool according to claim 14 or 15, characterized in that each of the filling tubes (6) is provided with a filling funnel (7) or the like.

17. Tool according to claim 16, characterized in that the inner volume of each tube (6) and filling funnel (7) corresponds substantially to the volume of the amount of synthetic particles (2) with which each channel (5) is desired to be filled.

18. Tool according to claim 17, characterized in that each filling tube (6) is made of stainless steel.

**Patentansprüche**

1. Matratze aus einer oberen und einer unteren Schicht (1), die aus einem Kunststoffschaummaterial bestehen und in Felder (5) aufgeteilt sind, welche Teilchen (2) aus synthetischem Material enthalten, und aus einer Umhüllung (3), die die obere und die untere Schicht umgibt, dadurch gekennzeichnet, daß die obere und die untere Schicht (1) aus einem porösen Kunststoffschaummaterial besteht, und daß die Felder als Kanäle (5) ausgebildet sind.

2. Matratze nach Anspruch 1, dadurch gekennzeichnet, daß die synthetischen Teilchen (2) rund sind.

3. Matratze nach Anspruch 1 oder 2, dadurch gekennzeichnet, daß die synthetischen Teilchen (2) aus Polystyrol bestehen.

4. Matratze nach Anspruch 1, 2 oder 3, dadurch gekennzeichnet, daß das Kunststoffschaummaterial (1) Polyäther ist.

5. Matratze nach Anspruch 4, dadurch gekennzeichnet, daß das Polyätherkunststoffschaummaterial eine Eindrückfestigkeit von 145 N bei einer Eindrückung von 40 % besitzt.

6. Matratze nach Anspruch 1, 2, 3, 4 oder 5, dadurch gekennzeichnet, daß die Matratze Querkanäle (5) aufweist.

7. Matratze nach Anspruch 6, dadurch gekennzeichnet, daß die Breite der Kanäle (5) im gepreßten flachen Zustand etwa 10 cm beträgt.

8. Matratze nach Anspruch 1, 2, 3, 4, 5, 6 oder 7, dadurch gekennzeichnet, daß die Dicke der porösen Kunststoffschaumschicht (1) wenigstens 5 mm beträgt.

9. Verfahren zur Herstellung einer Matratze gemäß einem der Ansprüche 1 bis 8, gekennzeichnet durch die folgenden Verfahrensschritte:

a) Zusammennähen von zwei Schichten aus Kunststoffschaummaterial (1) und von zwei Schichten eines Umhüllungsmaterials (3) derart, daß sich ein matratzenähnlicher Teil mit Kanälen (5) ergibt, von denen jeder mit einer Öffnung versehen ist,

b) Füllen der Kanäle (5) entweder einzeln oder gleichzeitig mit synthetischen Teilchen (2), wobei das Auffüllen vom Boden der Kanäle und fortschreitend in Richtung zu der Öffnung der Kanäle vorgenommen wird,

c) Zusammennähen der Öffnungen zur Bildung der fertigen Matratze.

10. Verfahren nach Anspruch 9, dadurch gekennzeichnet, daß die Kanäle (5) durch ein oder mehrere Rohre (6) aufgefüllt werden und daß während des Auffüllens die Rohre aus den Kanälen von dem Boden in Richtung auf die Öffnung herausbewegt werden.

11. Verfahren nach Anspruch 9 oder 10, dadurch gekennzeichnet, daß die synthetischen Teilchen (2) vor dem Auffüllvorgang mit einem antistatischen Mittel vermischt werden.

12. Verfahren nach Anspruch 9 oder 10, dadurch gekennzeichnet, daß die synthetischen Teilchen (2) vor dem Auffüllvorgang mit einem stärkehaltigen Pulver vermischt werden.

13. Verfahren nach Anspruch 12, dadurch gekennzeichnet, daß die synthetischen Teile (2) mit Kartoffelmehl vermischt werden.

14. Werkzeug zum Auffüllen einer Matratze gemäß einem der Patentansprüche 1 bis 8 während der Durchführung des Verfahrens gemäß einem der Ansprüche 9 bis 13, dadurch gekennzeichnet, daß das Werkzeug eine oder mehrere Füllrohre (6) aufweist, deren Länge wenigstens der Tiefe der aufzufüllenden Kanäle (5) entspricht.

15. Werkzeug nach Anspruch 14, dadurch gekennzeichnet, daß das bzw. die Einfüllrohre (6) einen länglichen Querschnitt besitzen.

16. Werkzeug nach Anspruch 14 oder 15, dadurch gekennzeichnet, daß jedes Einfüllrohr (6) mit einem Einfülltrichter (7) oder dergleichen versehen ist.

17. Werkzeug nach Anspruch 16, dadurch gekennzeichnet, daß das Innenvolumen jedes Rohrs (6) und des Einfülltrichters (7) im wesentlichen dem Volumen der Menge an synthetischen Teilchen (2) entspricht, mit der jeder Kanal (5) aufgefüllt werden soll.

18. Werkzeug nach Anspruch 17, dadurch gekennzeichnet, daß jedes Füllrohr (8) aus rostfreiem Stahl besteht.

**Revendications**

1. Matelas comprenant une couche supérieure et une couche inférieure (1), faites de matière plastique cellulaire et divisées en compartiments (5) contenant des particules (2) de maitère synthétique, et un recouvrement (3) entourant les couches supérieure et inférieure, caractérisé en ce que les couches supérieure et inférieure (1) sont faites de matière plastique cellulaire poreuse et en ce que les compartiments ont la forme de canaux (5).

2. Matelas selon la revendication 1, caractérisé en ce que les particules (2) de matière synthétique sont rondes.

3. Matelas selon la revendication 1 ou 2, caractérisé en ce que les particules (2) de matière synthétique sont faites de polystyrène.

4. Matelas selon la revendication 1, 2 ou 3, caractérisé en ce que la matière plastique cellulaire (1) est un polyéther.

5. Matelas selon la revendication 4, caractérisé en ce que la matière plastique cellulaire en polyéther a une force d'impression de 145 N à 40% d'impression.

6. Matelas selon la revendication 1, 2, 3, 4 ou 5, caractérisé en ce que le matelas possède des canaux transversaux (5).

7. Matelas selon la revendication 6, caractérisé en ce que la largeur des canaux (5), à l'état comprimé à plat, est d'environ 10 cm.

8. Matelas selon la revendication 1, 2, 3, 4, 5, 6 ou 7, caractérisé en ce que l'épaisseur de la couche de matière plastique cellulaire poreuse (1) est d'au moins 5 mm.

9. Procédé de production d'un matelas selon l'une des revendications 1 à 8, caractérisé par les étapes suivantes:

a) coudre ensemble deux couches de matière plastique cellulaire (1) et deux couches de matière de recouvrement (3) de telle manière qu'il en résulte un élément analogue à un matelas et comportant des canaux (5) dont chacun est muni d'une ouverture,

b) remplir les canaux (5) soit individuellement, soit en même temps, avec des particules (2) de matière synthétique, ce remplissage étant effectué à partir du fond des canaux et progressivement vers l'ouverture desdits canaux,

c) coudre ensemble les ouvertures pour former le matelas fini.

10. Procédé selon la revendication 9, caractérisé en ce que les canaux (5) sont remplis par l'intermédiaire d'un ou plusieurs tubes (6) et en ce que, pendant le remplissage, les tubes sont retirés des canaux, du fond à l'ouverture.

11. Procédé selon la revendication 9 ou 10, caractérisé en ce que les particules (2) de matière synthétique sont additionnées d'un agent antistatique, avant l'opération de remplissage.

12. Procédé selon la revendication 9 ou 10, caractérisé en ce que les particules (2) de matière synthétique sont additionnées d'une poudre à base d'amidon, avant l'opération de remplissage.

13. Procédé selon la revendication 12, caractérisé en ce que les particules (2) de matière synthétique sont additionnées de fécule de pomme de terre.

14. Outil pour remplir un matelas selon l'une des revendications 1 à 8 pendant la mise en oeuvre du procédé selon l'une des revendications 9 à 13, caractérisé en ce que l'outil comprend un ou plusieurs tubes de remplissage (6) dont la longueur est au moins égale à la profondeur des canaux (5) à remplir.

15. Outil selon la revendication 14, caractérisé en ce que le ou les tubes (6) ont une section transversale oblongue.

16. Outil selon la revendication 14 ou 15, caractérisé en ce que chacun des tubes de remplissage (6) est muni d'un entonnoir de remplissage (7) ou semblable.

17. Outil selon la revendication 16, caractérisé en ce que le volume intérieur de chaque tube (6) et de l'entonnoir de remplissage (7) est approximativement égal au volume de la quantité de particules (2) de matière synthétique dont on désire remplir chaque canal (5).

18. Outil selon la revendication 17, caractérisé en ce que chaque tube de remplissage (6) est fait d'acier inoxydable.

*Fig. 1*

Fig. 2

Fig. 3